# EUROPEAN PATENT SPECIFICATION

(11) **EP 2 181 476 B1**
(45) Date of publication and mention of the grant of the patent: **25.03.2015**
(21) Application number: 08793851.0
(22) Date of filing: 21.08.2008
(51) Int. Cl.: H01M 4/90, H01M 8/02, H01M 8/12, H01M 4/86

(54) **ELECTRODE FOR FIXED OXIDE REACTOR AND FIXED OXIDE REACTOR**
ELEKTRODE FÜR EINEN FESTOXIDREAKTOR UND FESTOXIDREAKTOR
ÉLECTRODE POUR RÉACTEUR À OXYDE FIXE ET RÉACTEUR À OXYDE FIXE

(30) Priority: 22.08.2007 NL 2000828
(43) Date of publication of application: 05.05.2010
(73) Proprietor: Hexis AG, 8404 Winterthur (CH)
(72) Inventor: OUWELTJES, Jan Pieter, NL-1721 HR Broek Op Langedijk (NL); VAN TUEL, Marc , Matheus , Antonius, NL-1861 TJ Bergen NH (NL)
(74) Representative: Intellectual Property Services GmbH
(86) International application number: PCT/NL2008/050559
(87) International publication number: WO 2009/025553

(56) References cited:
- EP-A- 1 528 615
- JP-A- 2 197 055
- US-A- 5 985 476
- US-A1- 2003 003 237
- PETROV A N ET AL: "Thermodynamics, defect structure, and charge transfer in doped lanthanum cobaltites: an overview" JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 10, no. 8, 4 May 2006 (2006-05-04), pages 517-537, XP019385452 ISSN: 1433-0768
- MORI M ET AL: "Reaction mechanism between lanthanum manganite and yttria doped cubic zirconia" SOLID STATE IONICS, NORTH HOLLAND PUB. COMPANY. AMSTERDAM, NL, vol. 123, no. 1-4, August 1999 (1999-08), pages 113-119, XP004172922 ISSN: 0167-2738
- KENJO T ET AL: "LAMNO3 AIR CATHODES CONTAININF ZRO2 ELECTROLYTE FOR HIGH TEMPERATURE SOLID OXIDE FUAL CELLS" SOLID STATE IONICS, NORTH HOLLAND PUB. COMPANY. AMSTERDAM, NL, vol. 57, no. 3/4, 1 October 1992 (1992-10-01), pages 295-302, XP000411949 ISSN: 0167-2738
- LESCANO G ET AL: "Synthesis and electrical conductivity of Y1-xMn1-yO3-delta" JOURNAL OF THE EUROPEAN CERAMIC SOCIETY, ELSEVIER SCIENCE PUBLISHERS, BARKING, ESSEX, GB, vol. 21, no. 10-11, 2001, pages 2037-2040, XP004301823 ISSN: 0955-2219

## Description

### FIELD OF THE INVENTION

The present invention relates to an electrode for a solid oxide reactor according to the preamble of Claim 1. The invention also relates to a solid oxide reactor. The invention also relates to a method for a solid oxide reactor.

### DESCRIPTION OF THE RELATED ART

A solid oxide reactor is a system suitable for causing an electrochemical reaction, i.e. chemical reactions in which two substances react with one another whilst exchanging electrical charge: a first substance is oxidized in a first partial reaction under the emission of one or more electrons while the second substance is reduced in a second partial reaction while receiving the one or more electrons. The operating temperature of solid oxide reactors is relatively high, being between approximately 500 and 1200°C.

The solid oxide reactor comprises a first and a second electrode that are in a laminar form and separated from one another by an electrolyte.

Due to the gaseous state of the reactants at the operating temperature the electrodes are porous in order to achieve the most efficient contact possible with the reactants.

An oxidation of the first substance supplied thereto takes place at one of the two electrodes, whereas the second substance supplied to the other electrode is reduced.

Charge transport in the form of oxygen ions occurs via the electrolyte between the first and the second electrode, and electron transport is caused through an external connection between the two electrodes.

The solid oxide reactor can therefore be operated as a fuel cell (SOFC: *solid oxide fuel cell*) and as an electrolysis cell (SOEC: *solid oxide electrolysis cell*).

In the fuel cell mode the partial reactions generate an external potential difference between the two electrodes. An example of electrochemical reaction for the solid oxide fuel cell is the combustion of hydrogen.

Hydrogen gas is supplied to a first electrode that reacts under the emission of electrons to this electrode together with oxygen ions to water. Oxygen gas is supplied to the second electrode that dissociates under the absorption of electrons into oxygen ions that move through the electrolyte to the first electrode.

In the electrolysis mode an external potential difference between the two electrodes ensures that the particular partial reaction can occur at each of the electrodes. An example of an electrochemical reaction for the solid oxide electrolysis cell is the dissociation of water. Water (vapor) is supplied to the first electrode that dissociates under the absorption of electrons into hydrogen and oxygen ions. Hydrogen is released at the external surface of the electrode. The oxygen ions diffuse via the electrolyte to the second electrode, where oxygen is released under the emission of electrons.

Electrodes in a solid oxide reactor that are exposed to reducing gas normally comprise a metal. The metal contributes to the catalytic activity of the electrode and ensures the conduction of the electrodes. A frequently used metal is nickel.

A. solid electrolytic fuel cell is known from document EP 1 528 615 A2 disclosing a fuel electrode made of ZrO₂ or CeO₂ and Ni or NiO.

Document WO 2004/013925 A1 discloses a fusel cell electrode made of a double perovskite oxide maternal in which the A- an B- sites are each occupied by two different elements.

Due to the high operating temperature the metal in the electrode has the tendency to sinter, thus reducing the porosity of the electrode and decreasing the catalytic activity. In order to prevent this, an oxide material is added to the metal that counteracts the sintering behavior.

Another disadvantage of the use of a metal is the susceptibility to oxidation when the metal is exposed to a rather high partial oxygen pressure, for example, during the occurrence of an interruption in the supply of reducing gas. Oxidation decreases the efficiency of the electrode.

Furthermore, there is an effect on the mechanical stability of the electrode structure. A change in volume (for example, an increase in volume) occurs by oxidation of the metal. After re-establishing the reducing atmosphere the metal oxide reduces and a change in volume occurs again (for example, a decrease in volume). This causes mechanical tensions in the structure of the electrodes and the electrolyte that reduce the mechanical integrity. In order to prevent fluctuation in the partial oxygen pressure, a protective gas is frequently used during the supply failure of the reducing gas.

### SUMMARY OF THE INVENTION

It is an objective of the present invention to provide an electrode for a solid oxide reactor in order to eliminate the disadvantages previously referred to.

The objective is achieved by providing an electrode for use as a cathode and as an anode for a solid oxide reactor comprising a first layer of a conductive oxide material, in which the conductive oxide material comprises at least one electrode-conductive oxide material provided with a defective structure and one ion-conductive oxide material provided with a defective structure.

Due to its composition and defective structure, the conductive oxide material referred to herein ensures that the electrode remains relatively stable as far as its mechanical properties and electrical properties are concerned within a relatively wide range of gas compositions and temperatures. This beneficial means of causing a change in the composition of a supplied gas has no adverse effects on the operation of the electrode.

Additionally, the invention provides a solid oxide reactor provided with an electrode structure comprising a first electrode, a second electrode, a first gas chamber, a second gas chamber and an ion-conductive medium, wherein an ion-conductive medium is located between the first electrode and the second electrode, wherein furthermore, the first electrode borders on the first gas chamber, and the second electrode borders on the second gas chamber, wherein the first electrode comprises a first layer of a conductive oxide material, the conductive oxide material being composed of at least one electron-conducting oxide material provided with a defective structure and one ion-conductive oxide material provided with a defective structure, and wherein the second electrode comprises a first layer of a conductive oxide material, the conductive oxide material being composed of at least one electron-conductive oxide material provided with a defective structure and one ion-conductive oxide material provided with a defective structure.

Moreover, the invention provides a method for a solid oxide reactor as referred to herein, comprising: the execution of a dissociation reaction of oxygen from an oxygen-containing gas at the first electrode.

Further embodiments according to the present invention are described in the subsequent claims.

### BRIEF DESCRIPTION OF THE DRAWINGS

The invention is explained in further detail below with the use of several drawings illustrating a number of exemplary embodiments. The drawings are intended for illustrative purposes only and in no way limit the scope and concept of the invention as defined in the accompanying claims.
Figure 1 shows a cross section of a solid oxide reactor provided with an electrode structure according to one embodiment of the present invention.
Figure 2 shows a cross section of a solid oxide reactor provided with an electrode structure according to another embodiment of the present invention.
Figure 3 shows a cross section of a solid oxide reactor provided with an electrode structure according to another embodiment of the present invention, and
Figure 4 shows a diagram of the electrical conductivity of an electrode according to an embodiment of the invention as a function of the partial oxygen pressure.

### DESCRIPTION OF THE EMBODIMENTS

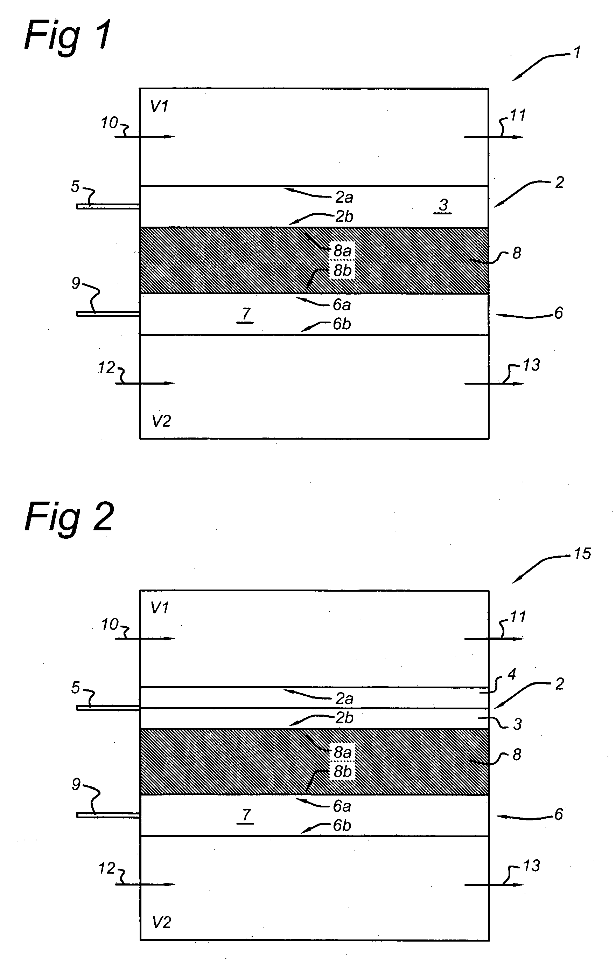

Figure 1 shows a cross section of a solid oxide reactor provided with an electrode structure according to one embodiment of the present invention.

A solid oxide reactor 1 comprises a first gas chamber V1, a second gas chamber V2, a first electrode 2, a second electrode 6 and an ion-conductive medium 8.

The first and second electrodes 2, 6 are designed in a substantially laminar form.

The first electrode 2 forms a wall of the first gas chamber V1 with a first area 2a.

A second area 2b of the first electrode 2 borders on a first surface 8a of the ion-conductive medium 8. The ion-conductive medium extends in a substantially laminar form along area 2b of first electrode 2.

Ion-conductive medium 8 has a second surface 8b, that borders on a first area 6a of the second electrode 6. A second area 6b of the second electrode 6, located opposite area 6a, borders on the second gas chamber V2.

The first electrode 2 can be connected to an external contact via a first connection 5. The second electrode 6 can be connected to a second external contact via a second connection 9.

The first gas chamber V1 is provided with an inlet 10 for the supply of a first gas and with a discharge 11 for discharging the gas from gas chamber V1.

The second gas chamber V2 is provided with an inlet 12 for the supply of a second gas and with a discharge 13 for discharging the gas from the second gas chamber V2.

The first electrode 2 is designed to be active in an environment with the reducing gas as well as in an environment with an oxidizing gas in the first gas chamber V1.

According to the embodiment, to this end the first electrode comprises at least one first layer 3 of a conductive oxide material, the conductive oxide material comprising at least one electron-conductive oxide material provided with a defective structure and an ion-conductive oxide material provided with a defective structure.

The electron-conductive oxide material provided with a defective structure comprises a Perovskite-type AₓB_{y}Mn_{1-z}TMₓO₃, wherein A is an alkaline earth metal, B is one or more elements from the lanthanide series of elements or comprises the IIIa series of elements, TM is a transition metal, with 0 ≤ x ≤ 0.1, 0.85 ≤ y ≤ 1.1 and 0 ≤ z ≤ 0.1.

Useable alkaline earth metals A include Sr, Ba, Ca, Mg.

Usable transition metals TM include, for example, Ni, Fe, Co, Cr.

Examples of an electron-conductive oxide material provided with a defective structure are La_{0.9}MnO₃ (A-site deficient lanthanum manganite), La_{0.9}Mn_{0.9}Fe_{0.1}O₃, La_{0.9}Mn_{0.9}Ni_{0.1}O₃, Pr_{0.9}MnO₃, La_{0.9}Sr_{0.05}MnO₃, Y_{0.9}MnO₃.

The ion-conductive oxide material provided with a defective structure comprises a cerium oxide compound AₓCe₁₋ₓO₂ or a zirconate AₓZr₁₋ₓO₂, in which A comprises one or more elements from the lanthanide series, or alkali metals or earth alkali metals, with 0 ≤ x ≤ 0.4.

Examples of an ion-conductive oxide material provided with a defective structure are Gd_{0.1}Ge_{0.9}O₂, Sm_{0.1}Ce_{0.9}O₂, Y_{0.1}Zr_{0.9}O₂, Sc_{0.2}Zr_{0.8}O₂.

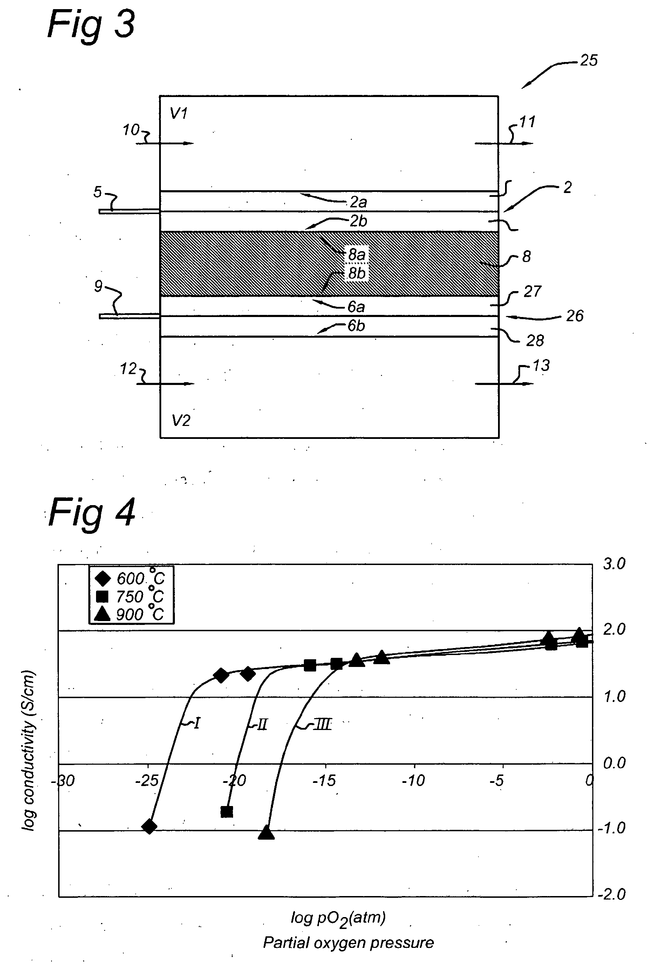

Due to its composition and defective structure, the conductive oxide material referred to herein ensures that the electrode remains relatively stable as far as its mechanical properties and electrical properties are concerned within a relatively wide range of gas compositions and temperatures. This beneficial means of causing a change in the composition of a supplied gas supplied in the first gas chamber V1 has no adverse effects on the operation of the electrode in the solid oxide reactor. This will be further explained with reference to Figure 4.

As a consequence thereof, a solid oxide reactor is provided within which the said electrode is not sensitive to transient conditions such as an interruption in the fuel supply. This means that sophisticated means for sealing the gas chamber(s) or the use of a protective gas in the gas chamber(s) is no longer required.

Additionally, in a further embodiment the first layer 3 also comprises one or more transition metals TM to an amount of approximately 10 wt%. The metal applied is one or more of the elements Ni, Co, Fe, Ag, Ru, Pt, Rh, Ir.

The ion-conductive medium 8 selected for this purpose can be either cerium-gadolinium-oxide or yttrium-zirconium oxide. Other materials that conduct oxygen ions are also conceivable and include, for example, the aforementioned cerium-oxide compounds AₓCe₁₋ₓO₂ or zirconates AₓZr₁₋ₓO₂.

In a further embodiment, it is also possible to use a proton-conductive material as the ion-conductive medium. An example of this is BaCe_{0.8}Gd_{0.2}O₃.

Various partial reactions may be performed at the first electrode.

In one embodiment a dissociation reaction of an oxygen-containing gas can be caused at the first electrode, during which oxygen ions are formed. For example, oxygen, air or an air/steam vapor or hydrogen/steam vapor mixture can be used as an oxygen-containing gas.

In a further embodiment an association reaction is caused at the first electrode, during which oxygen ions recombine to form oxygen gas or enter into an oxidation reaction with a gas such as hydrogen, methane, synthesis gas (i.e. nitrogen-free natural gas), and reformate gas (obtained from, e.g., diesel fuel or biofuel).

The solid oxide reactor, according to the invention, enables a dissociation reaction, association reaction or an oxidation reaction to take place at a reaction temperature between approximately 500°C and approximately 1200°C.

An electrolyte that conducts oxygen ions is used in the embodiment described above.

It may be noted that, when using a proton-conductive electrolyte instead of an electrolyte that conducts oxygen ions, the first electrode may also be used. However, in the aforementioned embodiment dissociation reactions involve hydrogen-containing gases, association reactions involve the formation of hydrogen gas, or they involve reduction actions, as is the case with oxygen gas.

Figure 2 shows a cross section of a solid oxide reactor 15 provided with an electrode structure according to a further embodiment of the present invention. In Figure 2 the same reference numerals used in the previous figure refer to corresponding parts.

In this further embodiment the first electrode comprises a second layer 4 of an electron-conductive oxide material, the electron-conductive oxide material of the second layer 4 comprising a manganite LnMnO₃ in which Ln is an element from the lanthanide series.

The second layer 4 is located between the first layer 3 and the first gas chamber V1. On one side, the second layer 4 borders on the first gas chamber V1. On another side, the second layer 4 borders on the first layer 3.

The positioning of second layer 4 on the first layer 3 is a beneficial means of causing the lateral electrical conductivity at the first electrode 2 to increase relative to the first electrode as described above with reference to Figure 1.

In one embodiment of the solid oxide reactor the second electrode 6 is designed in the same manner as the first electrode and the second electrode comprises at least one layer 7 of a conductive oxide material, the conductive oxide material comprising at least one electron-conductive oxide material provided with a defective structure and an ion-conductive oxide material provided with a defective structure.

Figure 3 shows a cross section of a solid oxide reactor 25 provided with an electrode structure according to a further embodiment of the present invention. In Figure 3 the same reference numerals used in the previous figure refer to the corresponding parts.

In yet another embodiments the second electrode 26 comprises a first layer 27 of a conductive oxide material, the conductive oxide material comprising at least one electrode-conductive oxide material provided with a defective structure, and one ion-conductive oxide material provided with a defective structure, and a second layer 28 of an electron-conductive oxide material, the electron-conductive oxide material of the second layer comprising a manganite LnMnO₃, in which Ln is an element from the lanthanide series. In the solid oxide reactor the second layer 28 of the second electrode is located between the first layer 27 of the second electrode and the second gas chamber V2. On one side, the second layer 28 of the second electrode borders on the second gas chamber V2. On another side, the second layed 28 of the second electrode borders on the first layer 27 of the second electrode.

Figure 4 shows an example of the electrical conductivity of an electrode according to the present invention as a function of the partial oxygen pressure and electrode temperature. The electrode measured here and used as an example consisted of A-site deficient La_{0.9}MnO₃. The electrode was 56 µm thick with a porosity of 25%. After warming up, the electrode is conditioned in synthetic air only after reaching a temperature of 900°C. Subsequent, the impedance is measured by a four-point measurement under equilibrium. Conductivity measurements are conducted within the temperature range of 600 to 900°C under various partial oxygen pressures. The electrode was conditioned for 12 hours each time the partial oxygen pressure was changed.

The electrical conductivity is represented on a logarithmic scale along the vertical axis. The partial oxygen pressure is represented on a logarithmic scale along the horizontal axis. The connection between electrical conductivity and partial oxygen pressure is represented by three different electrode temperatures, at 600°C (curve I), 750°C (curve II) and 900°C (curve XII).

Characteristic in the course of each of the curves is that at a low partial oxygen pressure the conductivity of the electrode decreases (at a lower boundary of the partial oxygen pressure < 10⁻¹⁹hPa (curve I), < 10⁻¹⁵hPa (curve II), < 10⁻¹³hPa (curve III)), whereas conductivity increases relatively slightly when above this lower boundary. It appears that when the conductivity of the electrode has become very low upon exposure to a partial oxygen pressure beneath the lower boundary, the conductivity recovers upon exposure to a higher partial oxygen pressure according to the mutual relationship depicted in Figure 4.

Other alternatives and equivalent embodiments of the present invention are also conceivable within the concept and scope of the invention, as will be evident to those skilled in the art. The inventive concept is therefore limited only by the accompanying claims.

## Claims

1. A. solid oxide reactor (1; 15; 25) provided with an electrode structure comprising a first electrode (2), a second electrode (6; 26), a first gas chamber (V1), a second gas chamber (V2) and an ion-conductive medium (8), wherein the ion-conductive medium (8) is located between the first electrode (2) and the second electrode (6; 26), wherein furthermore, the first electrode (2) borders on the first gas chamber (V1), and the second electrode (6; 26) borders on the second gas chamber (V2), wherein the first electrode (2) as cathode comprises a first layer (3) of a conductive oxide material, the conductive oxide material being composed of at least one electron-conductive oxide material provided with a defective structure and one ion-conductive oxide material provided with a defective structure, wherein the second electrode (6; 26) as anode comprises a first payer (7; 27) of a conductive oxide material, the conductive oxide material being composed of at least one electron-conductive oxide material provided with a defective structure and one ion-conductive oxide material provided with a defective structure, **characterised in that** the first and second electrode each comprise a second layer (4, 28) of an electron-conductive oxide material, and the electron-conductive oxide material of the second layer comprises a manganite LnMnO₃ with Ln an element from the lanthanide series.

2. Solid oxide reactor according to Claim 1, whereby the electron-conductive oxide material provided with a defective structure comprises Perovskite AₓB_{y}Mn_{1-z}TMₓO₃. whereby A is an alkaline earth metal, B comprises one or more elements from the lanthanide series or IIIa series element, and whereby TM is a transition metal, with 0 ≤ x ≤ 0.1, 0.85 ≤ y ≤ 1.1 and 0 ≤ z ≤ 0.1.

3. Solid oxide reactor according to Claim 1, whereby the ion-conductive oxide material provided with a defective structure comprises a cerium-oxide compound A₈Ce₁₋ₓO₂ or a zirconate AₓZr₁₋ₓO₃, whereby A comprises one or more lanthanide elements 0 ≤ x ≤ 0.4.

4. Solid oxide reactor according to Claim 2, whereby A is selected from at least one of a group of Sr, Ba, Ca, Mg.

5. Solid oxide reactor according to Claim 1, whereby the electron-conductive oxide material is selected from at least one or La_{0.9}MnO₃, La_{0.9}Mn_{0.9}Fe_{0.1}O3, La_{0.9}Mn_{0.9}Ni_{0.1}O₃, Pr_{0.9}MnO₃, La_{0.9}Sr_{0.05}MnO₃, and Y_{0.9}MnO₃.

6. Solid oxide reactor according to any of the preceding Claims 1-5, whereby the lanthanide element Ln is lanthanum.

7. Solid oxide reactor according to any of the preceding Claims 1-6, whereby the first layer further comprises transition metal TM or precious metal NM, whereby the amount of transition metal or precious metal docs not exceed 10 wt%.

8. Solid oxide reactor according to Claim 7, whereby the transition metal TM is selected from at least one from a group of Ni, Fe, Co, Cr.

9. Solid oxide reactor according to Claim 7, whereby the precious metal NM is selected from at least one from a group of Ag, Ru, Pt, Rh, Ir.

10. The solid oxide reactor according to Claim 1, whereby the first electrode (2) comprises a second layer (4) of an electron-conductive oxide material, and whereby the electron-conductive oxide material of the second layer comprises a manganite LnMn03 with Ln as an element from the lanthanide series, whereby the second layer is located between the first layer of the first electrode and the first gas chamber.

11. The solid oxide reactor according to any of the Claims 1-0, whereby the second electrode (26) comprises a second layer (28) of an electron-conductive oxide maternal, and
whereby the electron-conductive oxide material of the second layer comprises a manganite LnMnO₃ with Ln as an element from the lanthanide series, whereby the second layer is located between the first layer of the second electrode and the second gas chamber.

12. The solid oxide reactor according to any of the Claims 1-11, whereby the ion-conductive medium is selected from a group of cerium-gadolinium-oxide and yttrium-zirconium oxide.

13. The solid oxide reactor according to any of the Claim 1-12, whereby the ion-conductive medium is an oxide material suitable as proton conductor.

14. The solid oxide reactor according to Claim 13, whereby the ion-conductive medium comprises BaCe_{0.x}Gd_{0.2}O₃.

15. A method for a solid oxide reactor according to Claim 1, wherein a dissociation reaction of oxygen from an oxygen-containing gas is caused at the first electrode.

16. A method for a solid oxide reactor according to Claim 1, wherein an oxidation reaction of a reducing gas is caused at the second electrode.

17. A method for a solid oxide reactor according to Claim 15 or 16, wherein either the dissociation reaction or the oxidation reaction is caused at a reaction temperature between approximately 500°C and approximately 1200°C.

18. A method for a solid oxide reactor according to any of the Claims 15-17, wherein when either the dissociation reaction at the first electrode or the oxidation reaction is caused, a partial oxygen pressure pO₂ between 10⁻¹⁵ and 10⁺³ hPa is generated at the second electrode.

19. A method for a solid oxide reactor according to any of the Claims 15-18, wherein the reducing gas is selected from a group of hydrogen, methane, synthesis gas and reformate gas.

20. A method for a solid oxide reactor according to any of the Claims 15-18, wherein the oxygen-containing gas is selected from at least one of a group of oxygen, air, air/steam vapor mixture and hydrogen/steam vapor mixture.

## Patentansprüche

1. Festoxidreaktor (1; 15; 25), der mit einer Elektrodenstruktur versehen ist, die eine erste Elektrode (2), eine zweite Elektrode (6; 26), eine erste Gaskammer (V1), eine zweite Gaskammer (V2) sowie ein ionenleitendes Medium (8) umfasst, wobei das ionenleitende Medium (8) zwischen der ersten Elektrode (2) und der zweiten Elektrode (6; 26) angeordnet ist, wobei ferner die erste Elektrode (2) an der ersten Gaskammer (V1) angrenzt und die zweite Elektrode (6; 26) an der zweiten Gaskammer (V2) angrenzt, wobei die erste Elektrode (2) als Kathode eine erste Schicht (3) aus einem leitenden Oxidmaterial umfasst, wobei das leitende Oxidmaterial aus zumindest einem elektronenleitenden Oxidmaterial, das mit einer Defektstruktur versehen ist, und einem ionenleitenden Oxidmaterial besteht, das mit einer Defektstruktur versehen ist, wobei die zweite Elektrode (6; 26) als Anode eine erste Schicht (7; 27) aus einem leitenden Oxidmaterial umfasst, wobei das leitende Oxidmaterial aus zumindest einem elektronenleitenden Oxidmaterial, das mit einer Defektstruktur versehen ist, und einem ionenleitenden Oxidmaterial besteht, das mit einer Defektstruktur versehen ist, **dadurch gekennzeichnet, dass** die erste und zweite Elektrode jeweils eine zweite Schicht (4, 28) aus einem elektronenleitenden Oxidmaterial umfassen und das elektronenleitende Oxidmaterial der zweiten Schicht ein Manganit LnMnO₃ umfasst, wobei Ln ein Element aus der Lanthanidenreihe ist.

2. Festoxidreaktor nach Anspruch 1, wobei das elektronenleitende Oxidmaterial, das mit einer Defektstruktur versehen ist, Perovskit AₓB_{y}Mn_{1-z}TMₓO₃ umfasst,
wobei A ein Erdalkalimetall ist, B ein oder mehrere Elemente aus der Lanthanidenreihe oder ein Element der IIIa-Reihe umfasst, und wobei TM ein Übergangsmetall ist, wobei 0 ≤ x ≤ 0,1, 0,85 ≤ y ≤ 1,1 und 0 ≤ z ≤ 0,1.

3. Festoxidreaktor nach Anspruch 1, wobei das ionenleitende Oxidmaterial, das mit einer Defektstruktur versehen ist, eine Ceroxidverbindung AₓCe₁₋ₓO₂ oder ein Zirkonat AₓZr_{1-N}O₂ umfasst, wobei A ein oder mehrere Lanthanidenelemente 0 ≤ x ≤ 0,4 umfasst.

4. Festoxidreaktor nach Anspruch 2, wobei A aus zumindest einem aus einer Gruppe aus Sr, Ba, Ca, Mg gewählt ist.

5. Festoxidreaktor nach Anspruch 1, wobei das elektronenleitende Oxidmaterial aus zumindest einem aus La_{0,9}MnO₃, La_{0,9}Mn_{0,9}Fe_{0,1}O₃, La_{0,9}Mn_{0,9}Ni_{0,1}O₃, Pr_{0,9}MnO₃, La_{0,9}Sr_{0,5}MnO₃ und Y_{0,9}MnO₃ gewählt ist.

6. Festoxidreaktor nach einem der vorhergehenden Ansprüche 1 bis 5, wobei das Lanthanidenelement Ln Lanthan ist.

7. Festoxidreaktor nach einem der vorhergehenden Ansprüche 1 - 6, wobei die erste Schicht ferner ein Übergangsmetall TM oder ein Edelmetall NM umfasst, wobei die Menge an Übergangsmetall oder Edelmetall 10 Gew.-% nicht überschreitet.

8. Festoxidreaktor nach Anspruch 7, wobei das Übergangsmetall TM aus zumindest einem aus einer Gruppe aus Ni, Fe, Co, Cr gewählt ist.

9. Festoxidreaktor nach Anspruch 7, wobei das Edelmetall NM aus zumindest einem aus einer Gruppe von Ag, Ru, Pt, Rh, Ir gewählt ist.

10. Festoxidreaktor nach Anspruch 1, wobei die erste Elektrode (2) eine zweite Schicht (4) aus einem elektronenleitenden Oxidmaterial umfasst, und wobei das elektronenleitende Oxidmaterial der zweiten Schicht Manganit LnMn03 aufweist, wobei Ln ein Element aus der Lanthanidenreihe ist, wobei die zweite Schicht zwischen der ersten Schicht der ersten Elektrode und der ersten Gaskammer angeordnet ist.

11. Festoxidreaktor nach einem der Ansprüche 1 - 10,
wobei die zweite Elektrode (26) eine zweite Schicht (28) aus einem elektronenleitenden Oxidmaterial umfasst, und
wobei das elektronenleitende Oxidmaterial der zweiten Schicht Manganit LnMnO₃ mit Ln als einem Element aus der Lanthanidenreihe umfasst, wobei die zweite Schicht zwischen der ersten Schicht der zweiten Elektrode und der zweiten Gaskammer angeordnet ist.

12. Festoxidreaktor nach einem der Ansprüche 1 - 11,
wobei das ionenleitende Medium aus einer Gruppe aus Cer-Gadolinium-Oxid und Yttrium-Zirkonium-Oxid gewählt ist.

13. Festoxidreaktor nach einem der Ansprüche 1 - 12,
wobei das ionenleitende Medium ein Oxidmaterial ist, das als ein Protonenleiter geeignet ist.

14. Festoxidreaktor nach Anspruch 13, wobei das ionenleitende Medium BaC_{0,8}Gd_{0,2}O₃ umfasst.

15. Verfahren für einen Festoxidreaktor nach Anspruch 1, wobei eine Dissoziationsreaktion von Sauerstoff von einem sauerstoffhaltigen Gas an der ersten Elektrode bewirkt wird.

16. Verfahren für einen Festoxidreaktor nach Anspruch 1, wobei eine Oxidationsreaktion eines reduzierenden Gases an der zweiten Elektrode bewirkt wird.

17. Verfahren für einen Festoxidreaktor nach einem der Ansprüche 15 oder 16, wobei entweder die Dissoziationsreaktion oder die Oxidationsreaktion bei einer Reaktionstemperatur zwischen etwa 500°C und etwa 1200°C bewirkt wird.

18. Verfahren für einen Festoxidreaktor nach einem der Ansprüche 15 - 17, wobei, wenn entweder die Dissoziationsreaktion an der ersten Elektrode oder die Oxidationsreaktion bewirkt ist, ein Partialsauerstoffdruck pO₂ zwischen 10⁻¹⁵ und 10⁺³ hPa an der zweiten Elektrode erzeugt wird.

19. Verfahren für einen Festoxidreaktor nach einem der Ansprüche 15 - 18, wobei das reduzierende Gas aus einer Gruppe von Wasserstoff, Methan, Synthesegas und Reformatgas gewählt ist.

20. Verfahren für einen Festoxidreaktor nach einem der Ansprüche 15 - 18, wobei das sauerstoffhaltige Gas aus zumindest einem einer Gruppe aus Sauerstoff, Luft, einem Luft/Dampf-Gemisch und einem Wasserstoff/DampfGemisch gewählt ist.

## Revendications

1. Réacteur à oxyde solide (1 ; 15 ; 25) pourvu d'une structure d'électrode comprenant une première électrode (2), une deuxième électrode (6 ; 26), une première chambre de gaz (VI), une deuxième chambre de gaz (V2) et un milieu conducteur d'ions (8), le milieu conducteur d'ions (8) étant situé entre la première électrode (2) et la deuxième électrode (6 ; 26), dans lequel, en outre, la première électrode (2) borde la première chambre de gaz (V1), et la deuxième électrode (6 ; 26) borde la deuxième chambre de gaz (V2), où la première électrode (2) en tant que cathode comprend une première couche (3) d'un matériau d'oxyde conducteur, le matériau d'oxyde conducteur étant composé d'au moins un matériau d'oxyde conducteur d'électrons pourvu d'une structure défectueuse et d'un matériau d'oxyde conducteur d'ions pourvu d'une structure défectueuse, dans lequel la deuxième électrode (6 ; 26) en tant qu'anode comprend une première couche (7 ; 27) d'un matériau d'oxyde conducteur, le matériau d'oxyde conducteur étant composé d'au moins un matériau d'oxyde conducteur d'électrons pourvu d'une structure défectueuse et d'un matériau d'oxyde conducteur d'ions pourvu d'une structure défectueuse, **caractérisé en ce que** les première et deuxième électrodes comprennent chacune une deuxième couche (4, 28) d'un matériau d'oxyde conducteur d'électrons, et le matériau d'oxyde conducteur d'électrons de la deuxième couche comprend une manganite LnMnO₃, Ln étant un élément de la série des lanthanides.

2. Réacteur à oxyde solide selon la revendication 1, dans lequel le matériau d'oxyde conducteur d'électrons pourvu d'une structure défectueuse comprend une pérovskite AₓB_{y}Mni_{1-z}TMₓO₃,
dans laquelle A est un métal alcalino-terreux, B comprend un ou plusieurs éléments de la série des lanthanides ou un élément de la série IIIa, et dans laquelle TM est un métal de transition, avec 0 ≤ x ≤ 0,1, 0,85 ≤ y ≤ 1,1 et 0 ≤ z ≤ 0,1.

3. Réacteur à oxyde solide selon la revendication 1, dans lequel le matériau d'oxyde conducteur d'ions pourvu d'une structure défectueuse comprend un composé d'oxyde de cérium AₓCe₁₋ₓO₂ ou un zirconate AₓZr₁₋ₓO₂, où A comprend un ou plusieurs éléments lanthanides 0 ≤ x ≤ 0,4.

4. Réacteur à oxyde solide selon la revendication 2, dans lequel A est choisi parmi au moins l'un d'un groupe constitué de Sr, Ba, Ca, Mg.

5. Réacteur à oxyde solide selon la revendication 1, dans lequel le matériau d'oxyde conducteur d'électrons est choisi parmi au moins l'un de La_{0,9}MnO₃, La_{0,9}Mn_{0,9}Fe_{0,1}O₃, La_{0,9}Mn_{0,9}Ni_{0,1}O₃, Pr_{0,9}MnO₃, La_{0,9}Sr_{0,05}MnO₃, et Y_{0,9}MnO₃.

6. Réacteur à oxyde solide selon l'une quelconque des revendications précédentes 1 à 5, dans lequel l'élément lanthanide Ln est le lanthane.

7. Réacteur à oxyde solide selon l'une quelconque des revendications précédentes 1 à 6, dans lequel la première couche comprend en outre un métal de transition TM ou un métal précieux NM, la quantité de métal de transition ou de métal précieux ne dépassant pas 10 % en poids.

8. Réacteur à oxyde solide selon la revendication 7, dans lequel le métal de transition TM est choisi parmi au moins l'un d'un groupe constitué de Ni, Fe, Co, Cr.

9. Réacteur à oxyde solide selon la revendication 7, dans lequel le métal précieux NM est choisi parmi au moins l'un d'un groupe constitué de Ag, Ru, Pt, Rh, Ir.

10. Réacteur à oxyde solide selon la revendication 1, dans lequel la première électrode (2) comprend une deuxième couche (4) d'un matériau d'oxyde conducteur d'électrons, et dans lequel le matériau d'oxyde conducteur d'électrons de la deuxième couche comprend une manganite LnMnO₃, Ln étant un élément de la série des lanthanides, la deuxième couche étant située entre la première couche de la première électrode et la première chambre de gaz.

11. Réacteur à oxyde solide selon l'une quelconque des revendications 1 à 10, dans lequel la deuxième électrode (26) comprend une deuxième couche (28) d'un matériau d'oxyde conducteur d'électrons, et
dans lequel le matériau d'oxyde conducteur d'électrons de la deuxième couche comprend une manganite LnMnO₃, Ln étant un élément de la série des lanthanides, la deuxième couche étant située entre la première couche de la deuxième électrode et la deuxième chambre de gaz.

12. Réacteur à oxyde solide selon l'une quelconque des revendications 1 à 11, dans lequel le milieu conducteur d'ions est choisi dans un groupe constitué de l'oxyde de cérium-gadolinium et l'oxyde d'yttrium-zirconium.

13. Réacteur à oxyde solide selon l'une quelconque des revendications 1 à 12, dans lequel le milieu conducteur d'ions est un matériau d'oxyde adapté en tant que conducteur de protons.

14. Réacteur à oxyde solide selon la revendication 13, dans lequel le milieu conducteur d'ions comprend BaCe_{0,8}Gd_{0,2}O₃.

15. Procédé pour un réacteur à oxyde solide selon la revendication 1, dans lequel une réaction de dissociation d'oxygène à partir d'un gaz contenant de l'oxygène est causée à la première électrode.

16. Procédé pour un réacteur à oxyde solide selon la revendication 1, dans lequel une réaction d'oxydation d'un gaz réducteur est causée à la deuxième électrode.

17. Procédé pour un réacteur à oxyde solide selon la revendication 15 ou 16, dans lequel la réaction de dissociation ou la réaction d'oxydation est causée à une température de réaction entre approximativement 500 °C et approximativement 1200 °C.

18. Procédé pour un réacteur à oxyde solide selon l'une quelconque des revendications 15 à 17, dans lequel, lorsque la réaction de dissociation à la première électrode ou la réaction d'oxydation est causée, une pression partielle d'oxygène pO₂ comprise entre 10⁻¹⁵ et 10⁻¹³ hPa est générée à la deuxième électrode.

19. Procédé pour un réacteur à oxyde solide selon l'une quelconque des revendications 15 à 18, dans lequel le gaz réducteur est choisi dans un groupe constitué de l'hydrogène, du méthane, d'un gaz de synthèse et d'un gaz de reformage.

20. Procédé pour un réacteur à oxyde solide selon l'une quelconque des revendications 15 à 18, dans lequel le gaz contenant de l'oxygène est choisi parmi au moins l'un d'un groupe constitué de l'oxygène, l'air, un mélange d'air/vapeur d'eau et un mélange d'hydrogène/vapeur d'eau.
